Europäisches Patentamt

European Patent Office

Office européen des brevets

(19)

(11) Publication number: **0 156 921**
**A1**

## EUROPEAN PATENT APPLICATION

published in accordance with Art. 158(3) EPC

(21) Application number: **84903450.9**

(22) Date of filing: **13.09.84**

Data of the international application taken as a basis:

(86) International application number:
**PCT/JP 84/00444**

(87) International publication number:
**WO 85/01365 (28.03.85 85/8)**

(51) Int. Cl.⁴: **G 05 B 19/403**

(30) Priority: **16.09.83 JP 170709/83**

(43) Date of publication of application: **09.10.85**
**Bulletin 85/41**

(84) Designated Contracting States: **DE FR GB**

(71) Applicant: **FANUC LTD, 3580, Shibokusa Aza-Komanba Oshino-mura, Minamitsuru-gun Yamanashi 401-05 (JP)**

(72) Inventor: **KURAKAKE, Mitsuo, Izumi Heights 103 No. 3-3-10, Tamadaira, Hino-shi Tokyo 191 (JP)**
Inventor: **YAMAUCHI, Takashi, Green-Hill-Terada 20-202 No. 432, Terada-cho, Hachioji-shi Tokyo 193 (JP)**
Inventor: **KINOSHITA, Jiro, No. 252, Shimotsuruma, Yamato-shi Kanagawa-ken 242 (JP)**

(74) Representative: **Billington, Lawrence Emlyn et al, HASELTINE LAKE & CO Hazlitt House 28 Southampton Buildings Chancery Lane, London WC2A 1AT (GB)**

(54) **NUMERICAL CONTROL APPARATUS.**

(57) A numerical control apparatus having a main processor and a plurality of subsidiary processors is capable of high-speed data transfer between the processors. The numerical control apparatus is provided with a means (5) which allows direct data transfer between the subsidiary processors (20, 30), in addition to the data transfer between the main processor (10) and each of the subsidiary processors (20, 30).

EP 0 156 921 A1

0156921

TITLE MODIFIED
see front page

S P E C I F I C A T I O N

NUMERICAL CONTROL EQUIPMENT

## TECHNICAL FIELD

The present invention relates to numerical control equipment which is provided with a single main processor and a plurality of sub-processors.

## BACKGROUND ART

In general, numerical control equipment includes a plurality of sub-processors allocated to each group of candidates for control and a single main processor for controlling linked operations and so on of the respective sub-processors. Prior art numerical control equipment of this kind permit data transmission and reception only between the main processor and each sub-processor but do not allow direct data transmission and reception between the respective sub-processors. That is, the respective sub-processors perform the data transmission and reception inderectly through the main processor.

However, such conventional equipment require much time for the data transmission and reception between the sub-processors, and hence encounter the problem of a decrease in control speed or accuracy. For Example, in the case of synchronously running motors or the like which are candidates for control by the respective sub-processors, it is necessary that the sub-processor mutually transmit and receive data on the rotational angles and speeds of the motors, but since the data transmission and reception are carried out indirectly through the main processor, and hence consume much time, resulting in the reduction of control speed and accuracy.

DISCLOSURE OF THE INVENTION

The present invention has been made in view of the abovesaid problem of the prior art, and has for its object to provide numerical control equipment which permits high-speed data transmission and reception between sub-processors.

To attain the above object, the present invention includes means which allows direct data transmission and reception between the sub-processors as well as the data trasmission and reception between the main processor and the sub-processors.

BRIEF DESCRIPTION OF THE DRAWINGS

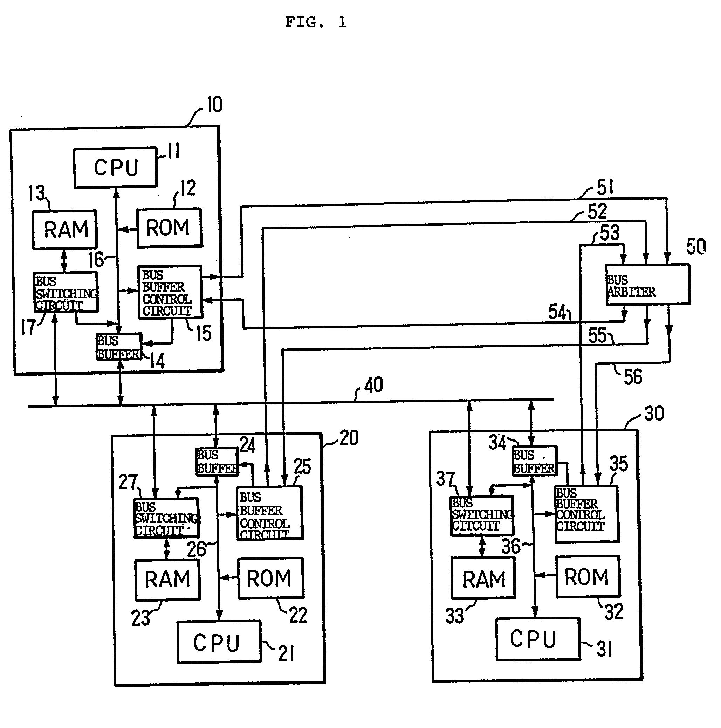

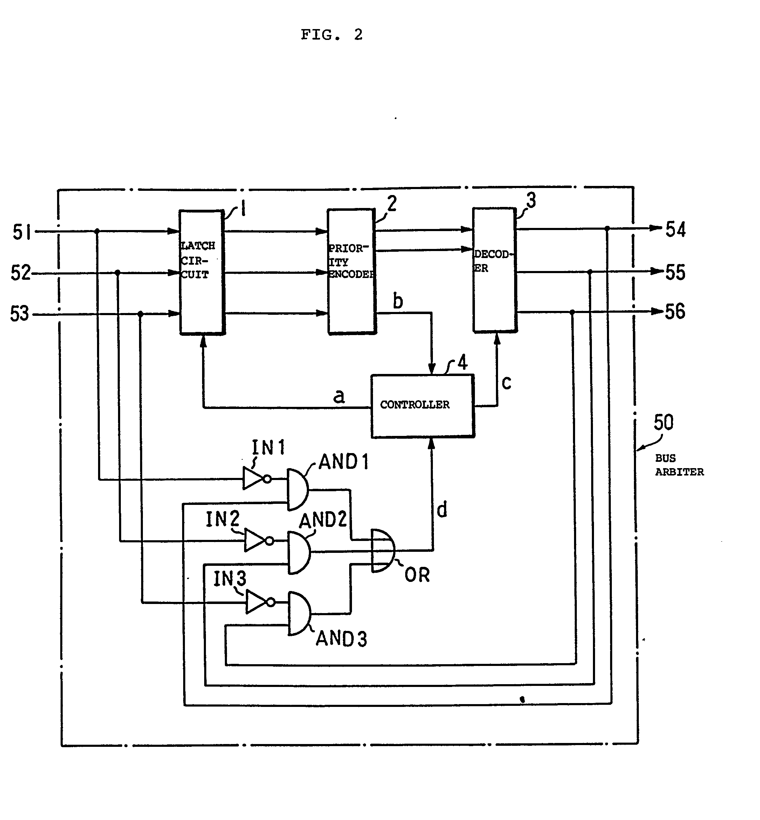

Fig. 1 is a block diagram illustrating an embodiment of the present invention; and Fig. 2 is a block diagram showing an example of the arrangement of a bus arbiter.

BEST MODE FOR CARRYING OUT THE INVENTION

Fig. 1 illustrates in block form an embodiment of the present invention, in which reference numeral 10 indicates a main processor, 20 and 30 sub-processors, 40 a system bus and 50 a bus arbiter.  In the main processor 10 and the sub-processors 20 and 30, reference numerals 11, 21 and 31 designate CPUs, 12, 22 and 32 ROMs, 13, 23 and 33 RAMs, 14, 24 and 34 bus buffers, 15, 25 and 35 bus buffer control circuits, 16, 26 and 36 internal buses and 17, 27 and 37 bus switching circuits.

When the necessity arises that the CPUs 11, 21 and 31 of the processors 10, 20 and 30 read out data from or write data in the RAM of the processor of the counterpart, they issue requests for use of the system bus 40 to the bus arbiter 50 via the bus control circuits 15, 25 and 35 and request-for-use- of- bus lines 51, 52 and 53, respectively. Incidentally, in this case, the processors 10, 20 and 30 notify the bus arbiter 50 of the request for use of the system bus 40 by providing signals "1" on the request-for-use lines 51, 52 and 53, respectively.

The bus arbiter 50 services the competing requests from the processors in a predetermined order of priority and gives permission of use to any one of the bus buffer control circuits 15, 25 and 35 via the correponding one of permission-for-use-of-bus lines 54, 55 and 56. Incidentally, the bus arbiter 50 notifies each of the bus buffer control circuits 15, 25 and 35 of the permission for use of the system bus 40 by providing a signal "1" on each of the permission-for-use-of-bus lines 54, 55 and 56.

The bus arbiter 50 for such processing has an arrangement, for instance, shown in Fig. 2. In Fig. 2, reference numeral 1 indicates a latch circuit, 2 a priority encoder, 3 a decoder, 4 a controller, OR an OR gate, AND1 to AND3 AND gates and IN1 to IN3 inverters. Incidentally, the latch circuit 1 latches the signals that are applied thereto via the request-for-use-of-bus lines 51 to 53 when an output signal a of the controller 4 is a "1", and when the signal a is a "0", the signals provided to the latch circuit via the request-for-use-of-bus lines 51 to 53 are applied to the priority encoder. The priority encoder 2 encodes the data latched in the latch circuit 1 and then provides them to the decoder 3 and, at the same time, when aleast one of the signals applied thereto via the request-for-use-of-bus lines 51 to 53 goes to a "1", the priority encoder makes its output signal b a "1". The decoder 3 decodes the data from the priority encoder 2 and provides a permission-for-use-of-bus signal on any one of the permission-for-use-of-bus lines 54 to 56 and, at the same time, when a signal c provided thereto from the controller 4 goes to a "0", the decoder provides a signal "0" on each of the permission-for-use-ofbus lines 54 to 56. Upon detecting that the output signal b of the priority encoder 2 happens to be a "1", the controller 4 makes the signal a to the latch circuit 1 a "1", and upon detecting that an output aignal d of the OR gate OR happens to be a "1", the controller makes the signal a a "0", and further, while the output signal d of the OR gate OR is at "1", it keeps its output signal c at "1".

Accordingly, when any one of the signals on the request-for-use-of-bus lines 51 to 53, all of which have been at "0" (the state of no request being made for the use of the system bus 40), goes to a "1" (the state in which the request for the use of the system bus 40 has occurred),
the signals b and a go to a "1" in order and the signal made
high on one of the request-for-use-of-bus lines 51 to 53 is
latched in the latch circuit 1 and then a signal
corresponding to the data latched in the latch circuit 1
is provided from the decoder 3 on that one of the permission-
for-use-of-bus lines 54 to 56 which corresponds to the
processor having generated the request.  Incidentally, the
priority encoder 2 and the decoder 3 are arranged so as to
apply the permission-for-use-of-bus signal only to the
processor of the highest priority in the case of the
plurality of processors 10, 20 and 30 competing for the
use of the system bus 40.

The CPU of the processor which have received the
permission-for-use-of-bus signal from the bus arbiter 50
reads data from or writes data in the RAM of the counterpart via the system bus 40 and the bus switching circuit of
the counterpart.

Further, when the processor (for instance, the
processor 30) having used the system bus 40 aborts its
right of use and makes the signal on the request-for-use-
of-bus line 53 a "0", the output signal of the AND gate
AND3 goes to a "1" and the signal d to the controller 4
goes to a "1".  As a result of this, the controller 4 makes
its output a a "0" so that the signals on the request-for-
use-of-bus lines 51 to 53 are applied to the priority
encoder 2, and the controller makes its output c a "1" to cause all the output signals of the decoder 3 to go to "0s", returning the bus arbier 50 to its initial state.

As described above, since the present invention is constituted to have such means as the bus arbiter 50 which permits direct data transmission and reception between the respective sub-processors as well as the data transmission and reception between the main processor and the sub-processors, it enables high-speed direct data transmission and reception between the sub-processors and hence possesses the advantage of enhancement of control speed and accuracy.

( 7 )                          0156921

## C L A I M

Numerical control equipment which is provided. with a single main processor and plurality of sub-processors, characterized by the provision of:

means for permitting direct transmission and reception of data between the main processor and the respective sub-processors and between the sub-processors.

FIG. 1

0156921

FIG. 2

# INTERNATIONAL SEARCH REPORT

International Application No. PCT/JP84/00444

## I. CLASSIFICATION OF SUBJECT MATTER (if several classification symbols apply, indicate all) [3]

According to International Patent Classification (IPC) or to both National Classification and IPC

Int. Cl$^3$  G05B 19/403

## II. FIELDS SEARCHED

| Minimum Documentation Searched [4] | |
|---|---|
| Classification System | Classification Symbols |
| IPC | G05B19/403, 15/00 |

| Documentation Searched other than Minimum Documentation to the Extent that such Documents are included in the Fields Searched [5] |
|---|
| Jitsuyo Shinan Koho        1956 – 1984 <br> Kokai Jitsuyo Shinan Koho   1971 – 1984 |

## III. DOCUMENTS CONSIDERED TO BE RELEVANT [14]

| Category* | Citation of Document, [16] with indication, where appropriate, of the relevant passages [17] | Relevant to Claim No. [18] |
|---|---|---|
| Y | JP, A, 49-67543 (Hitachi, Ltd.) 1 July 1974 (01. 07. 74) Columns 5 to 7 | |
| Y | JP, A, 57-17014 (Fujitsu Fanuc Ltd.) 28 January 1982 (28. 01. 82) & EP, A1, 55782 & WO, A, 8200210 | |

* Special categories of cited documents: [16]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search [2] | Date of Mailing of this International Search Report [2] |
|---|---|
| November 21, 1984 (21. 11. 84) | December 3, 1984 (03.12.84) |
| International Searching Authority [1] <br> Japanese Patent Office | Signature of Authorized Officer [20] |

Form PCT/ISA/210 (second sheet) (October 1981)